# DEMANDE DE BREVET EUROPEEN

(11) **EP 4 843 718 A1**
(43) Date de publication de la demande: **25.11.2026**
(21) Numéro de dépôt: 26179533.0
(22) Date de dépôt: 19.05.2026
(51) Int. Cl.: B25J 19/00, B25J 11/00, B25J 15/08

(54) **SYSTÈME DE MANIPULATION D'UN COMPOSANT D'UN ARTICLE DE LUXE ET PROCÉDÉ DE MANIPULATION ASSOCIÉ**

(30) Priorité: 19.05.2025 CH 5392025
(71) Demandeur: Richemont International SA, 1752 Villars-sur-Glane (CH)
(72) Inventeur: VODICHON, Matthieu, 25650 LA LONGEVILLE (FR)
(74) Mandataire: Lavoix

(57) **Abrégé**

La présente invention concerne un système de manipulation d'un composant d'un article de luxe tel qu'une pièce d'horlogerie ou de joaillerie, comprenant un dispositif robotisé (12) comprenant au moins un mors (27) configuré pour recevoir un habillage de protection pour envelopper au moins partiellement ledit mors (27), l'habillage de protection étant au moins partiellement constitué d'une membrane élastique.

## Description

La présente invention concerne un système de manipulation d'un composant d'un article de luxe.

La présente invention concerne également un procédé de manipulation d'un tel composant mis en œuvre par le système de manipulation.

De manière générale, la manipulation des articles de luxe avant leur emballage et livraison s'effectue de manière manuelle. Cela signifie que généralement un operateur manipule des articles de luxe ou au moins des composants de ceux-ci avant leur emballage et livraison.

On conçoit alors que cela présente un risque d'endommagement d'au moins certains composants de ces articles de luxe.

De plus, une manipulation manuelle peut conduire à des erreurs ou à des imprécisions lors de l'emballage des articles de luxe.

Enfin, il est généralement difficile d'assurer la répétabilité d'un tel processus avec un même résultat pour l'ensemble des articles de luxe par exemple d'un même type.

La présente invention a pour but de remédier à ces inconvénients et en particulier de proposer des moyens permettant d'éviter tout endommagement des articles de luxe lors des manipulations avec ceux-ci. L'invention permet en outre de mettre en œuvre de telles manipulations de manière répétable et précise.

À cet effet, l'invention concerne un système de manipulation d'un composant d'un article de luxe tel qu'une pièce d'horlogerie ou de joaillerie, comprenant un dispositif robotisé comprenant au moins un mors configuré pour recevoir un habillage de protection pour envelopper au moins partiellement ledit mors, l'habillage de protection étant au moins partiellement constitué d'une membrane élastique.

Munie de ces caractéristiques l'invention propose ainsi d'automatiser les opérations de préhension et de placement des composants des articles de luxe, ce qui permet d'éviter tout endommagement de ces articles. Il est également possible de configurer un tel système de manipulation de sorte que l'ensemble des manipulations soient mises en œuvre de manière répétable et précise.

Suivant d'autres aspects avantageux de l'invention, le système de manipulation comprend une ou plusieurs des caractéristiques suivantes prises isolément ou suivant toutes les combinaisons techniquement possibles :
- l'habillage de protection est une enveloppe en polymère étirable/élastique, par exemple un doigtier horloger ;
- le système comprenant en outre une chambre à vide configurée pour mettre l'habillage de protection dans un état étiré ;
- le dispositif robotisé étant configuré pour déplacer le mors dans la chambre à vide afin de positionner l'habillage de protection dans l'état étiré sur le mors ;
- le dispositif robotisé comprend au moins une paire de mors, chaque mors étant configuré pour recevoir un habillage de protection ;
- le dispositif robotisé étant configuré pour déplacer au moins l'un des mors dans la chambre à vide afin de positionner un habillage de protection respectif ;
- le système comprenant en outre un dérouleur configuré pour dérouler l'habillage de protection d'un état enroulé à un état déroulé ;
- le dérouleur comprend un dispositif de maintien configuré pour maintenir l'habillage de protection lors de son positionnement et/ou déroulement ;
- le dispositif de maintien est configuré en outre pour enlever et maintenir l'habillage de protection dans l'état déroulé ;
- la chambre à vide comprend :
   - un corps délimitant un volume interne de la chambre à vide et définissant une ouverture;
   - un support disposé sur l'ouverture du corps et configuré pour fixer une base de l'habillage de protection en fermant ainsi le volume interne de la chambre à vide;
   - un dispositif de dépressurisation configuré pour créer une dépressurisation dans le volume interne de la chambre à vide lorsque la base de l'habillage de protection est fixée sur le support.
- le système comprenant en outre un positionneur configuré pour positionner la base de l'habillage de protection sur le support de la chambre à vide ;
- le positionneur comprend un dispositif d'écartement configuré pour adapter les dimensions de la base de l'habillage de protection à celles du support de la chambre à vide ;
- le dispositif robotisé comprend en outre un dispositif de retrait permettant de retirer l'habillage de protection du ou de chaque mors après son utilisation ;
- le dispositif de retrait comprend un canal pneumatique pour le ou chaque mors, intégré dans ce mors et configuré pour éjecter de l'air sous pression pour retirer l'habillage de protection lorsque l'habillage de protection est reçu sur ce mors ; et
- le ou chaque mors définit au moins une dimension, de préférence une dimension transversale, supérieure à la dimension correspondante de l'habillage de protection dans son état non étiré.

L'invention a également pour objectif un procédé de manipulation d'un composant d'un article de luxe par un système de manipulation tel que défini ci-dessus, le procédé comprenant les étapes suivantes :
- mise d'un habillage de protection dans un état étiré ;
- positionnement de l'habillage de protection sur un mors d'un dispositif robotisé du système de manipulation.

Suivant d'autres aspects avantageux de l'invention, le procédé de manipulation comprend une ou plusieurs des caractéristiques suivantes prises isolément ou suivant toutes les combinaisons techniquement possibles :
- le procédé comprenant en outre une étape de déroulement de l'habillage de protection d'un état enroulé à un état déroulé ;
- le procédé comprenant en outre une étape de positionnement de l'habillage de protection dans l'état déroulé sur un support pour sa mise dans l'état étiré ; et
- le procédé comprenant en outre une étape de retrait de l'habillage de protection du mors correspondant.

Ces caractéristiques et avantages de l'invention apparaîtront plus clairement à la lecture de la description qui va suivre, donnée uniquement à titre d'exemple non limitatif et faite en référence aux dessins annexes sur lesquels :
- la figure 1 est un schéma-bloc illustrant de manière schématique un système de manipulation selon l'invention ;
- les figures 2 à 6 sont des vues schématiques de différentes composantes du système de manipulation de la figure 1 ;
- la figure 7 est un organigramme d'un procédé de manipulation mis en œuvre par le système de manipulation de la figure1 ;
- les figures 8 à 13 sont différentes vues illustrant la mise en œuvre d'au moins certaines étapes du procédé de manipulation de la figure 7.

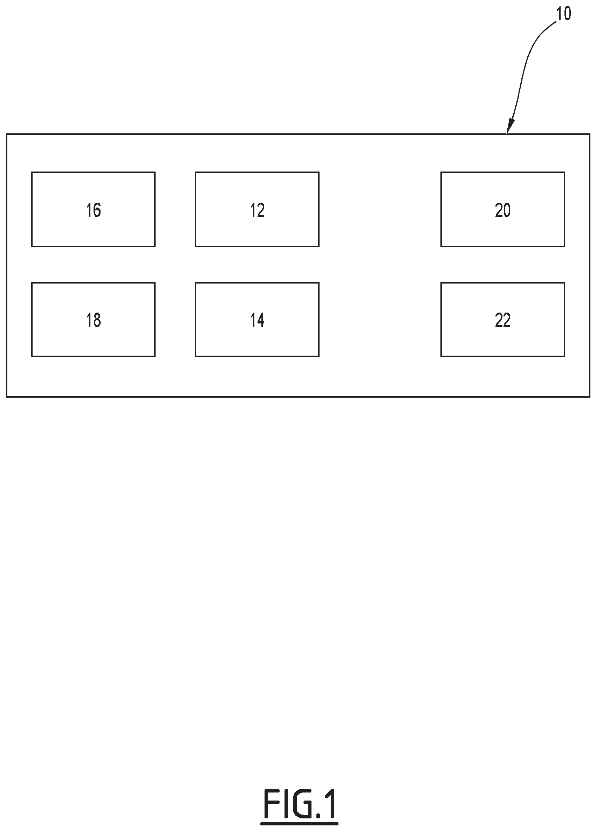

On a en effet illustré sur la figure 1 un système de manipulation 10 qui permet de manipuler au moins un composant d'un article de luxe.

Par « article de luxe », on entend tout article présentant une grande valeur dont la manipulation doit être effectuée avec une précaution particulière. Par exemple, un tel article de luxe peut être un article d'horlogerie, un article de joaillerie, un article de maroquinerie ou un instrument d'écriture.

L'article de luxe peut être composé de plusieurs composants. Ces composants peuvent être séparables. Selon un autre mode de réalisation, l'article de luxe présente une pièce inséparable. Dans un tel cas, lorsqu'il est fait mention d'un composant d'un article de luxe, une telle mention s'applique à l'intégralité de l'article.

Le système de manipulation 10 permet de mettre en œuvre des manipulations avec au moins un composant d'un tel article de luxe, par exemple lors de son emballage.

Selon d'autres exemples de réalisation, le système de manipulation 10 permet de mettre en œuvre des manipulations avec au moins un composant d'un tel article de luxe lors de son assemblage ou lors d'au moins certaines étapes de sa production ou de sa maintenance.

Comme cela est illustré schématiquement sur la figure 1, le système de manipulation 10 comprend des composantes mécaniques 12 à 18 ainsi que des composantes de contrôle 20, 22 de telles composantes mécaniques 12 à 18. Parmi les composantes mécaniques, le système de manipulation 10 comprend notamment un dispositif robotisé 12, une chambre à vide 14, un dérouleur 16 et un positionneur 18. Le dérouleur 16 et le positionneur 18 peuvent être optionnels.

Parmi les composantes de contrôle, le système de manipulation 10 comprend un module de commande 20 et une interface de commande 22.

L'interface de commande 22 présente par exemple une interface de communication permettant à l'opérateur ou à tout autre système externe d'introduire des commandes devant être exécutées par le système de manipulation 10 et notamment par les composantes mécaniques 12 à 18 de celui-ci. Chaque commande est choisie par exemple dans une liste de commandes prédéterminées. Chaque commande peut également comprendre une séquence de commandes prédéterminées.

Le module de commande 20 présente un module électronique permettant de commander l'ensemble des composantes mécaniques 12 à 18 afin de mettre en œuvre le fonctionnement du système de manipulation 10.

En particulier, le module de commande 20 permet de transmettre à chacune des composantes mécaniques 12 à 18 une commande de fonctionnement permettant par exemple de commencer une action ou de finaliser une action ainsi que des commandes de paramétrage transmettant à ces composantes mécaniques des paramètres de fonctionnement. Ces paramètres de fonctionnement dépendent notamment de la nature de la composante mécanique correspondante et certains d'entre eux seront expliqués plus en détail par la suite.

Ces commandes de fonctionnement et/ou ces commandes de paramétrage sont par exemple déterminées par le module de commande 20 en fonction des commandes transmises par l'opérateur ou par un système externe via l'interface de commande 22.

Le module de commande 20 permet en outre de synchroniser le fonctionnement de différentes composantes mécaniques 12 à 18.

Selon différents modes de réalisation, le module de commande 20 présente par exemple un logiciel mis en œuvre par un processeur et stocké dans une mémoire. Dans un tel cas, le processeur et la mémoire font également partie du système de manipulation 10. De manière alternative ou complémentaire, le module de commande 20 se présente au moins partiellement sous la forme d'un circuit logique programmable, tel qu'un circuit FPGA (de l'anglais « Field Programmable Gate Array »).

Le module de commande 20 peut être raccordé aux composantes mécaniques 12 à 18 par tout moyen techniquement possible, i.e. par tout type de canaux de communication. Par exemple, le module de commande 20 peut être raccordé à ces composantes mécaniques 12 à 18 par des câbles (y compris la fibre optique) ou de manière sans fil.

Dans ce dernier cas, le module de commande 20 ainsi que chacune des composantes mécaniques 12 à 18 disposent des moyens de communication sans fil tels que par exemple des moyens de communication par des ondes radioélectriques ou des moyens de communication optiques.

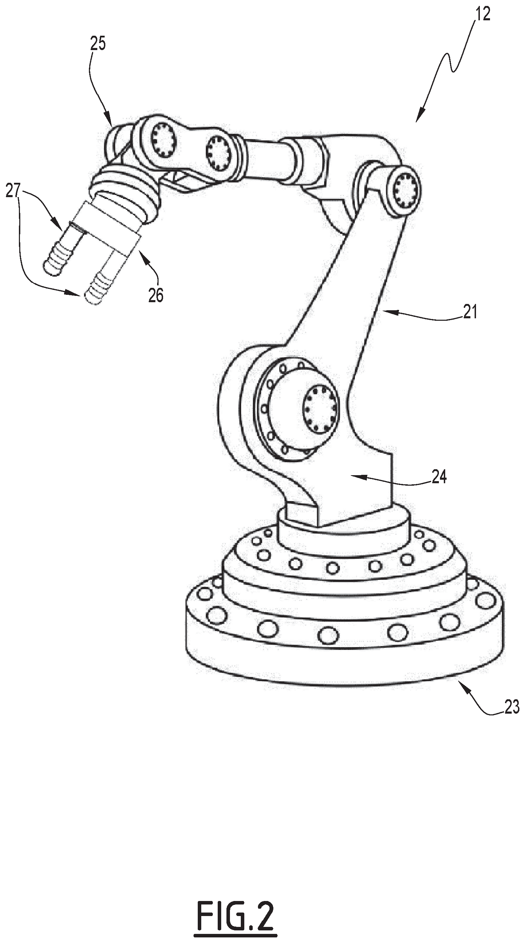

Le dispositif robotisé 12 est illustré plus en détail sur la figure 2.

Ainsi, en référence à cette figure 2, le dispositif robotisé 12 présente par exemple un bras robotisé 21 monté par exemple sur une embase 23. Cette embase 23 est disposée de manière fixe ou mobile dans l'endroit dans lequel une opération d'emballage ou toute autre manipulation avec un composant d'un article de luxe doit avoir lieu.

Dans l'exemple de la figure 2, le bras robotisé 21 comprend une succession de segments mobiles l'un par rapport à l'autre. En particulier, les segments de chaque paire de segments adjacents sont raccordés entre eux par au moins une articulation leur permettant de tourner l'un par rapport à l'autre selon un axe. De plus, au moins certains segments peuvent être animés d'un mouvement de translation selon au moins un axe, par exemple lorsqu'au moins un autre segment est animé d'un mouvement de rotation.

De manière générale, le bras robotisé 21 ou encore plus généralement le dispositif robotisé 12, peut être formé par tout type de robot connu en soi, par exemple par un robot de type delta, cartésien, parallèle, série, etc.

Dans l'exemple de la figure 2, la succession de segments comprend notamment un segment d'embase 24 formant le début de la succession et un segment d'extrémité 25 formant la fin de la succession.

Le segment d'embase 24 est raccordé à l'embase 23. Il peut par exemple être monté rotatif sur cette embase 23 par rapport à un axe vertical.

Le segment d'extrémité 25 reçoit un organe de préhension 26 permettant de manipuler ledit composant de l'article de luxe comme cela sera expliqué plus en détail par la suite.

En particulier, le segment d'extrémité 25 permet d'animer l'organe de préhension 26 d'un mouvement de rotation autour au moins d'un axe, de préférence autour de trois axes, et/ou d'un mouvement de translation suivant au moins un axe, de préférence suivant trois axes. Un tel mouvement est créé notamment par un jeu de mouvements des différents segments précédant le segment d'extrémité 25 dans la succession de segments.

Dans certains exemples, l'organe de préhension 26 est reçu de manière fixe par le segment d'extrémité 25. Dans certains autres exemples, l'organe de préhension 26 est reçu de manière mobile par le segment d'extrémité 25.

De manière générale, l'organe de préhension 26 peut être fixé au bras robotisé 21 ou plus généralement au dispositif robotisé 12 de toute autre manière convenable, notamment en fonction du type du robot utilisé.

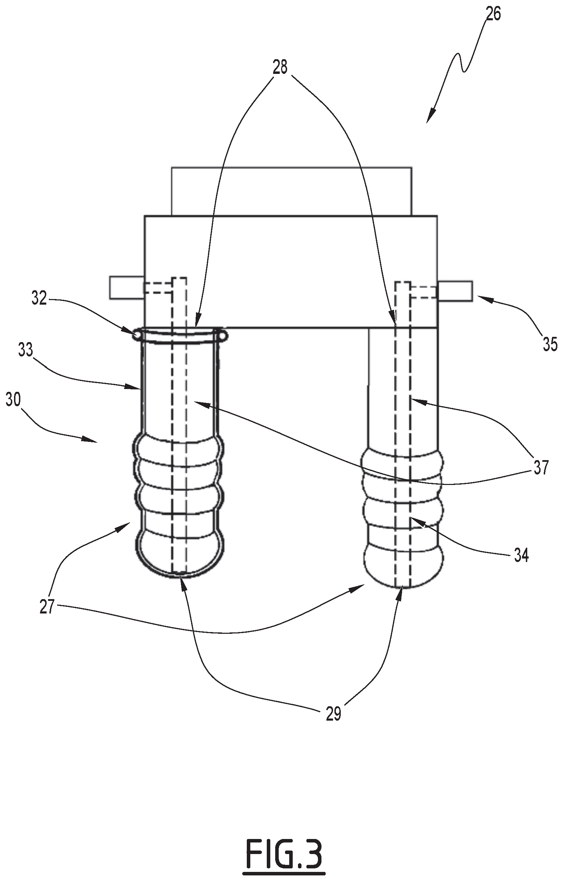

L'organe de préhension 26 est illustré plus en détail sur la figure 3.

En particulier, en référence à cette figure 3, l'organe de préhension 26 comprend avantageusement une paire de mors 27 permettant de serrer ledit composant de l'article de luxe entre eux. De manière générale, l'organe de préhension 26 peut comprendre un nombre N de mors, ce nombre N peut être égal à 3, 4, 5, etc. Le nombre N de mors est avantageusement choisi en fonction de la nature dudit composant de l'article de luxe et/ou en fonction de la nature de l'organe de préhension 26.

Chaque mors 27 présente par exemple une forme allongée s'étendant entre une extrémité de fixation 28 à une base de l'organe de préhension 26 et une extrémité libre 29. Par exemple, chaque mors 27 présente une forme sensiblement cylindrique. De manière générale, la forme du mors 27 peut être adaptée pour favoriser la préhension dudit composant de l'article de luxe.

Les mors 27 sont montés sur la base de l'organe de préhension 26 dans un état de repos, par exemple de manière parallèle l'un à l'autre. Dans un état serré, les mors 27 sont tournés l'un vers l'autre à partir de l'extrémité de fixation 28 correspondante afin de serrer ledit composant de l'articule de luxe entre les extrémités libres 29 de ces mors 27.

Dans certains modes de réalisation, les mors 27 sont configurés en outre pour effectuer des mouvements supplémentaires en fonction notamment de la nature des tâches pour lesquelles l'organe de préhension 26 est conçu.

La forme de chaque mors 27 est adaptée pour recevoir un habillage de protection 30 visible également sur la figure 3.

De manière générale, par « habillage de protection », on entend tout habillage du mors 27 correspondant permettant de manipuler ledit composant de l'article de luxe sans abimer celui-ci et avantageusement sans laisser de traces.

Ainsi, l'habillage de protection 30 est fait d'un matériau permettant d'assurer de telles caractéristiques.

Par exemple, ce matériau présente du polymère, du textile ou du latex ou toute combinaison de tels matériaux.

De manière avantageuse, l'habillage de protection 30 présente une enveloppe étirable/élastique, tel qu'un doigtier horloger connu en soi. En particulier, de manière connue en soi, un tel doigtier présente un habillage séparé pour chaque doigt d'un horloger ou de tout autre opérateur manipulant un composant sensible, comme par exemple un mécanisme d'horloge. Les doigtiers horlogers peuvent être de différentes tailles, en fonction notamment du doigt pour lequel ce doigtier est conçu et/ou de la morphologie de l'opérateur.

En référence à la figure 3, l'habillage de protection 30 est constitué au moins partiellement d'une membrane élastique et comprend une base 32 définissant une ouverture, et une partie cylindrique 33 s'étendant à partir de la base 32 et présentant une extrémité scellée. L'habillage de protection 30 est par exemple fourni dans un état enroulé dans lequel la partie cylindrique 33 est au moins partiellement enroulée sur la base 32.

De manière générale, la forme de l'habillage de protection 30 est configurée pour épouser la forme du mors 27 correspondant.

En particulier, dans certains exemples, l'habillage de protection 30 définit une surface intérieure destinée à coopérer avec le mors 27 et une surface opérationnelle destinée à entrer en contact avec ledit composant de l'article de luxe. Ces surfaces peuvent avoir des textures différentes. Par exemple, la surface intérieure peut avoir une texture facilitant sa rétention sur le mors 27 correspondant et la surface opérationnelle peut avoir une texture facilitant les manipulations avec ledit composant de l'article de luxe.

Toutefois l'habillage de protection 30 pourrait également être en matériaux différents et assemblés entre eux, par exemple par collage, une première portion de l'habillage de protection étant en matériau élastique permettant son maintien sur le mors et une deuxième portion en matériau non élastique et recouvrant sans l'épouser le mors.

Dans certains autres exemples, l'habillage de protection 30 définit des surfaces de textures identiques à l'intérieur et à l'extérieur de sorte qu'elles peuvent être utilisées indifféremment pour coopérer avec le mors 27 correspondant et entrer en contact avec ledit composant de l'article de luxe.

Dans certains modes de réalisation, chaque mors 27 peut définir un relief de rétention 34 permettant de retenir l'habillage de protection 30 sur ce mors. Comme cela est visible sur la figure 3, un tel relief de rétention peut être formé par un profil ondulé.

Alternativement ou en complément, chaque mors 27 définit au moins une dimension, de préférence une dimension transversale, supérieure à la dimension correspondante de l'habillage de protection 30 dans son état non étiré, c'est-à-dire dans son état de repos.

Dans certains modes de réalisation, l'organe de préhension 26 comprend en outre un dispositif de retrait 35 permettant de retirer l'habillage de protection 30 de chacun des mors 27.

Dans l'exemple de la figure 3, le dispositif de retrait 35 comprend pour chaque mors 27, un canal pneumatique 37 s'étendant à travers le mors correspondant.

En particulier, chaque canal pneumatique 37 s'étend entre l'extrémité de fixation 28 du mors 27 correspondant jusqu'à par exemple son extrémité libre 29.

Chaque canal pneumatique 37 définit une entrée d'air et au moins une sortie d'air.

L'entrée d'air du canal pneumatique 37 est raccordée par exemple à une pompe de pressurisation faisant partie également du dispositif de retrait 35 et permettant de créer un flux d'air comprimé à l'intérieur du canal pneumatique 37 correspondant. Ce flux d'air comprimé est alors destiné à être éjecté via une ou plusieurs sorties de ce canal pneumatique 37 pour enlever l'habillage de protection 30 lorsque celui-ci est mis sur le mors 27 correspondant. La pression d'éjection est par exemple supérieure à 0.5 bars.

Ainsi, au moins une sortie du canal pneumatique 37 est avantageusement agencée sur l'extrémité libre 29 du mors 27 correspondant.

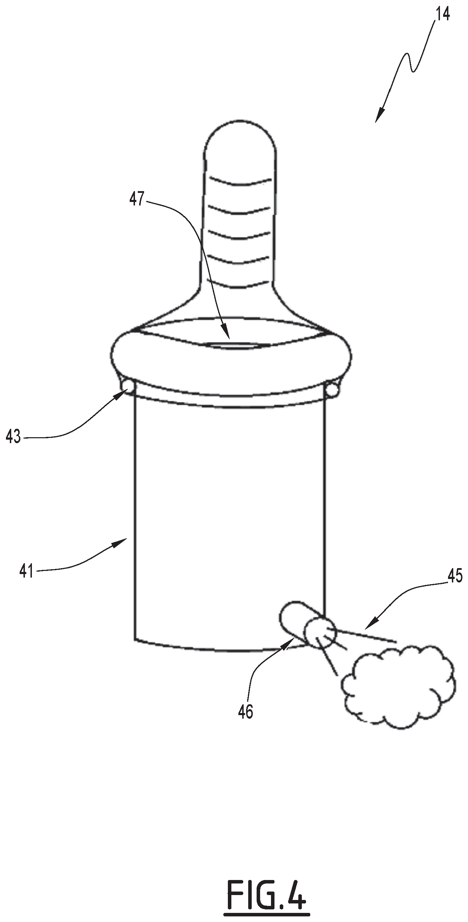

La chambre à vide 14 est illustrée schématiquement sur la figure 4.

Cette chambre à vide 14 permet une mise en place de l'habillage de protection 30 sur le mors 27 correspondant. En particulier, la chambre à vide 14 permet d'étirer l'habillage de protection 30 de sorte à ce qu'il puisse être mis en place sur le mors 27 correspondant. Lorsque l'habillage de protection 30 est fourni à l'envers, la chambre à vide 14 permet son inversion de sorte que la surface opérationnelle de cet habillage 30 soit orientée à l'extérieur lorsque l'habillage 30 est mis sur le mors 27.

Pour ce faire, en référence à la figure 4, la chambre à vide 14 comprend un corps 41 délimitant un volume interne de la chambre, un support 43 et un dispositif de dépressurisation 45.

Le corps 41 de la chambre à vide 14 présente par exemple une forme cylindrique s'étendant entre une extrémité fermée et une extrémité ouverte définissant une ouverture 47.

Le volume interne de la chambre à vide 14 est configuré pour recevoir l'habillage de protection 30 dans son état étiré.

Ce volume est adapté aux dimensions ainsi qu'à la forme de l'habillage de protection 30 dans son état étiré.

Par exemple, lorsque l'habillage de protection 30 présente un doigtier horloger de relativement petite taille, le volume interne de la chambre à vide 14 peut par exemple être environ de 130 cm³.

Pour des tailles plus grandes du doigtier horloger, le volume interne de cette chambre 14 peut par exemple être sensiblement égal à 290 cm³.

À titre d'exemple, le volume interne de la chambre à vide 14 peut varier entre 100 cm³ et 350 cm³, avantageusement entre 120 cm³ et 300 cm³.

De manière générale, le volume interne de la chambre à vide 14 peut être défini en fonction des dimensions de l'habillage de protection 30 et donc de celles du mors 27 correspondant. Le volume interne de la chambre à vide 14 peut également être défini en fonction de la capacité de l'habillage de protection 30 à s'étirer dans sa zone élastique. En particulier, plus l'habillage de protection 30 est en mesure de s'étirer, plus la chambre à vide 14 peut être grande.

Le support 43 délimite l'ouverture 47 du corps 41 et est configuré pour fixer la base 32 de l'habillage de protection 30 afin de fermer, de préférence de manière hermétique, le volume interne de la chambre à vide 14.

Le support 43 présente par exemple une surépaisseur agencée à cet effet sur une paroi extérieure du corps 41 de la chambre à vide 14.

Bien entendu, le support 43 peut se présenter sous toute autre forme convenable pour fixation de la base 32 de l'habillage de protection 30.

Le dispositif de dépressurisation 45 est configuré pour créer une pression négative (i.e. dépressurisation) dans le volume interne de la chambre à vide 14 lorsque l'habillage de protection 30 est fixé sur le support 43.

Ainsi, dans un tel cas, le volume interne de la chambre à vide 14 se trouve fermé hermétiquement par l'habillage de protection 30 et il est donc possible de créer une dépressurisation dans le volume interne de la chambre à vide 14.

Le dispositif de dépressurisation 45 comprend par exemple une pompe agencée par exemple à l'extérieur du volume interne de la chambre à vide 14 et raccordé à ce volume interne via un conduit 46 agencé dans un trou formé à l'extrémité fermée du corps 41.

En particulier, le dispositif de dépressurisation 45 permet de créer une pression négative, avantageusement inférieure à - 0.3 bars.

Cette valeur de dépressurisation ainsi que la durée de fonctionnement du dispositif de dépressurisation 45 peuvent par exemple être contrôlées par le module de commande 20.

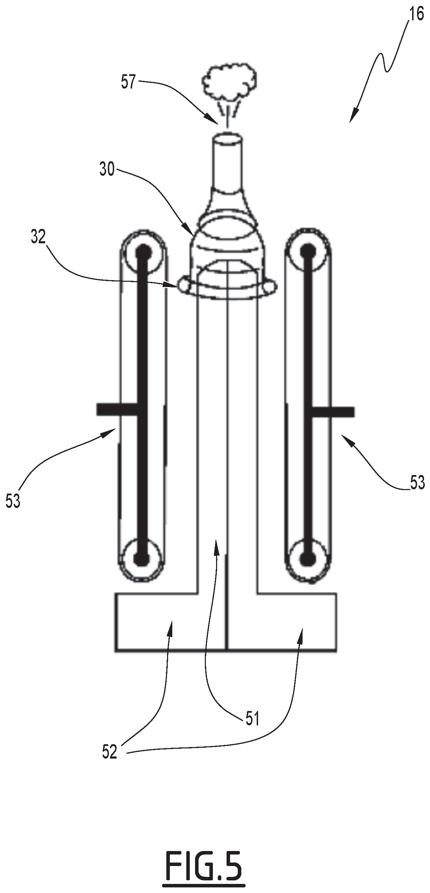

La figure 5 illustre plus en détail le dérouleur 16 permettant de dérouler l'habillage de protection 30.

En particulier, ce dérouleur 16 est configuré pour dérouler l'habillage de protection 30 lorsque celui-ci est fourni dans l'état enroulé.

Pour ce faire, le dérouleur 16 comprend un doigt de déroulement 51 configuré pour recevoir l'habillage de protection 30. Ce doigt de déroulement 51 présente par exemple une forme cylindrique permettant d'épouser les parois internes de l'habillage de protection 30 lors de son déroulement.

Dans certains exemples, le doigt de déroulement 51 présente deux parties opposées 52 configurées pour s'écarter l'une de l'autre.

Le dérouleur 16 comprend en outre une paire de courroies 53 permettant de venir à l'appui contre la base 32 de l'habillage de protection 30 pour le dérouler le long du doigt de déroulement 51.

Dans l'exemple de la figure 5, les courroies 53 sont configurées pour se déplacer l'une vers l'autre afin de coincer la base 32 de l'habillage de protection 30 et dérouler cette base 32 le long du doigt de déroulement 51. Les courroies 53 peuvent être mises en mouvement par une ou plusieurs roues disposées par exemple à leurs extrémités.

Selon certains modes de réalisation, le dérouleur 16 comprend en outre un dispositif de maintien 57 permettant de maintenir l'habillage de protection 30 lors de son positionnement et éventuellement lors de son déroulement le long du doigt de déroulement 51.

Ce dispositif de maintien 57 se présente par exemple sous la forme d'une ventouse configurée pour s'accrocher à l'extrémité scellée de l'habillage de protection 30.

En outre, selon certains modes de réalisation, le dispositif de maintien 57 est adapté pour enlever et maintenir l'habillage de protection 30 dans l'état déroulé après son déroulement le long du doigt de déroulement 51.

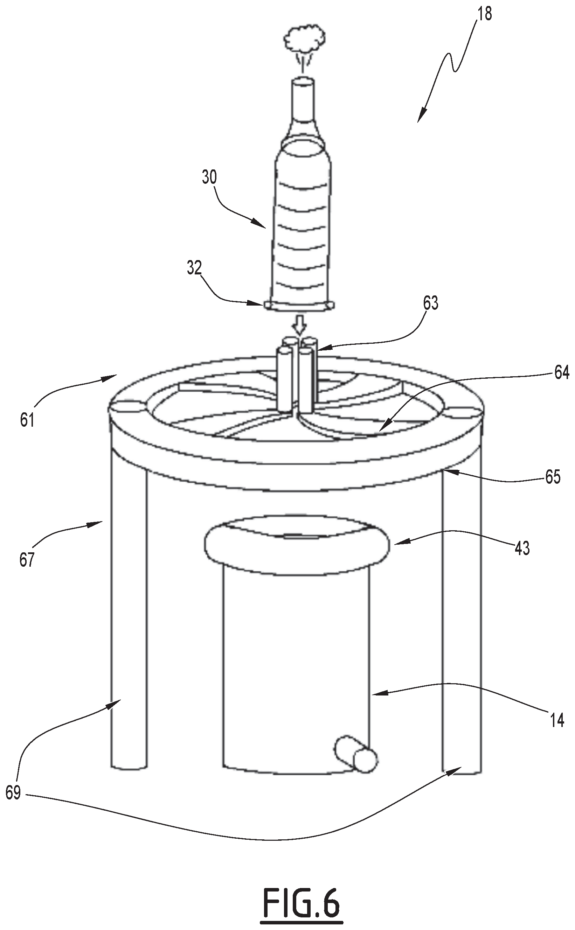

La figure 6 illustre en détail le positionneur 18 permettant de positionner l'habillage de protection 30 sur le support 43 de la chambre à vide 14.

Le positionneur 18 comprend par exemple un dispositif d'écartement 61 permettant d'adapter les dimensions de la base 32 de l'habillage de protection 30 à celles du support 43 de la chambre à vide 14.

Pour ce faire, le dispositif d'écartement 61 comprend par exemple des protubérances d'écartement 63 configurés pour pénétrer dans la partie interne de l'habillage de protection 30 lorsque celui-ci se trouve dans son état déroulé, et des actionneurs 64 permettant d'écarter ces protubérances d'écartement 63 selon des directions radiales dans les sens opposés. Les actionneurs 64 peuvent être montés dans la partie interne d'une bague de fixation 65 assurant le mouvement des actionneurs 64 soit pour écarter soit pour resserrer les protubérances d'écartement 63. Le dispositif d'écartement 61 se présente ainsi sous la forme d'un diaphragme dont l'ouverture modifie l'écartement des protubérances d'écartement 63.

Le positionneur 18 comprend en outre avantageusement un système de positionnement 67 permettant de positionner le dispositif d'écartement 61 au-dessus de la chambre à vide 14.

Dans certains cas, ce système de positionnement 67 comprend au moins une paire de guides 69 configurés pour assurer la mobilité du dispositif d'écartement 61 selon une direction verticale afin de positionner la base 32 de l'habillage de protection 30 sur le support 43 de la chambre à vide 14.

Après le positionnement de cette base 30, le positionneur 18 peut être configuré pour retirer les protubérances d'écartement 63 de la partie interne de l'habillage de protection 30 et ensuite pour s'éloigner de la chambre à vide 14 avec l'habillage de protection 30 monté sur celle-ci.

Selon différents modes de réalisation, au moins certaines composantes mécaniques parmi la chambre à vide 14, le dérouleur 16 et le positionneur 18 sont configurées pour être déplacées après et/ou avant leur fonctionnement par exemple par un robot tel que le dispositif robotisé 12 décrit ci-dessus.

De manière alternative, ces différents déplacements sont effectués au moins partiellement par l'opérateur.

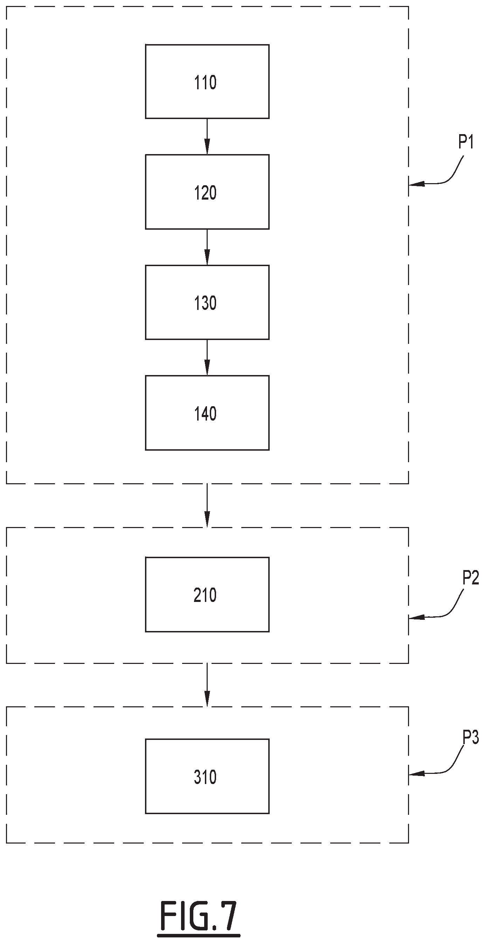

Le système de manipulation 10 permet de mettre en œuvre un procédé de manipulation dudit composant de l'article de luxe qui sera désormais en référence aux figures 7 à 13.

En particulier, la figure 7 illustre un organigramme de ce procédé de manipulation. Ce procédé de manipulation comprend une première phase P1 de positionnement d'au moins un habillage de protection 30, une deuxième phase P2 de manipulation dudit composant de l'article de luxe en utilisant au moins un habillage de protection 30 et une troisième phase P3 d'enlèvement du ou de chaque habillage de protection 30.

Avant la mise en œuvre de la première phase P1 de positionnement, il est considéré qu'au moins un habillage de protection 30 est fourni dans l'état enroulé.

Lors d'une étape 110 de cette première phase P1, l'habillage de protection 30 dans l'état enroulé est positionné sur le dérouleur 16 pour son déroulement.

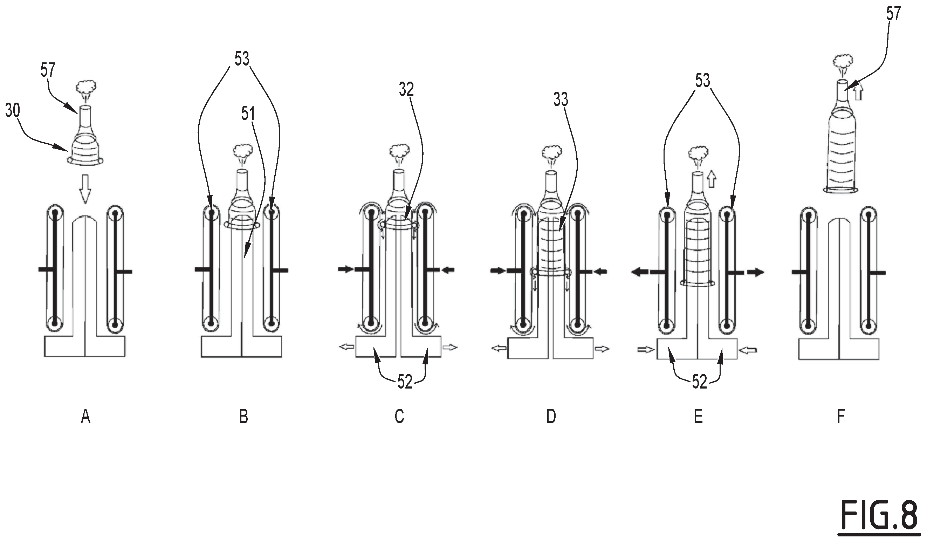

Cette étape 110 est illustrée en détail sur la figure 8.

Ainsi, comme cela est illustré sur cette figure 8, lors d'une sous-étape A de l'étape 110, l'habillage de protection 30 peut être maintenu par le dispositif de maintien 57 et ensuite, lors d'une sous-étape B, être placé sur le doigt de déroulement 51. Dans cette position, les courroies 53 se trouvent à l'écart l'une de l'autre.

En outre, lorsqu'il existe une différence entre les différentes surfaces de l'habillage de protection 30, celui-ci est placé sur le doigt de déroulement 51 de sorte que sa surface intérieure se trouve orientée vers l'extérieur et sa surface opérationnelle se trouve orientée vers l'intérieur. Autrement dit, l'habillage de protection 30 se trouve à l'envers.

Ensuite, lors d'une sous-étape C, les parties opposées 52 du doigt de déroulement 51 sont écartées l'une de l'autre et simultanément, les courroies 53 sont rapprochées l'une vers l'autre. Cela permet alors de coincer la base 32 de l'habillage de protection 30 entre ces parties 52 du doigt de déroulement 51 et les courroies 53.

Lors d'une sous-étape D, les courroies 53 sont mises en mouvement ce qui permet de dérouler la base 32 et la partie cylindrique 33 de l'habillage de protection 30 le long du doigt de déroulement 51.

Lorsque l'habillage de protection 30 est entièrement déroulé, les parties opposées 52 du doigt de déroulement 51 sont rapprochées alors que les courroies 53 sont écartées l'une de l'autre lors d'une sous-étape E.

Ainsi, lors d'une sous-étape F, l'habillage de protection 30 dans l'état déroulé est enlevé du doigt de déroulement 51 en utilisant le dispositif de maintien 57. Les mouvements du dispositif de maintien 57 sont par exemple animés par un bras robotisé tel que le bras robotisé 21 ou un autre bras robotisé. En variante, le dispositif de maintien 57 est déplacé par l'opérateur.

Lors d'une étape 120 suivante, la base 32 de l'habillage de protection 30 est positionnée sur le support 43 de la chambre à vide 14 en utilisant notamment le positionneur 18.

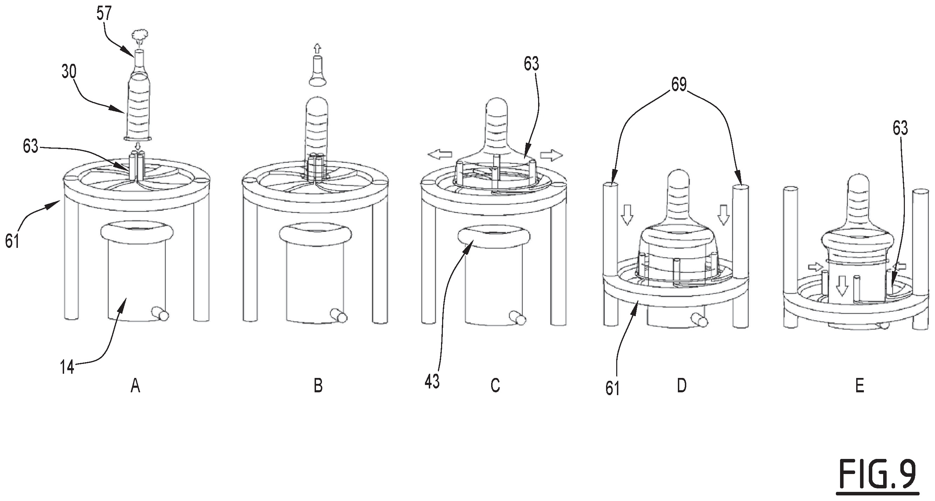

Cette étape est schématiquement illustrée sur la figure 9.

En particulier, en référence à cette figure 9, l'étape 120 comprend une sous-étape A lors de laquelle l'habillage de protection 30 dans l'état déroulé est positionné sur le dispositif d'écartement 61 par exemple par le dispositif de maintien 57. Lors de cette sous-étape, les protubérances d'écartement 63 sont resserrées et pénètrent dans la partie interne de l'habillage de protection 30. Il est à noter en outre que la chambre à vide 14 se trouve au-dessous du dispositif d'écartement 61.

Ensuite, lors d'une sous étape B, le dispositif de maintien 57 est enlevé. Pour cela, lorsque le dispositif de maintien 57 présente une ventouse, la dépression interne créée entre l'habillage de protection 30 et cette ventouse peut être relâchée.

Lors d'une sous-étape C suivante, le dispositif d'écartement 61 est mis en action de sorte que les protubérance d'écartement 63 s'écartent du centre selon les directions radiales correspondantes.

Cela étend alors la base 32 de l'habillage de protection 30 jusqu'à par exemple des dimensions légèrement supérieures à celles du support 43 de la chambre à vide 14.

Lors d'une sous-étape D suivante, le dispositif d'écartement 61 est déplacé par les guides 69 suivant la direction verticale jusqu'à ce que la base 32 de l'habillage de protection 30 épouse le support 43 de la chambre à vide 14.

Finalement lors d'une sous-étape E, le dispositif d'écartement 61 est abaissé davantage pour sortir les protubérances d'écartement 63 de l'espace formé entre la base 32 de l'habillage de protection 30 et le support 43 de la chambre à vide 14.

Le positionneur 18 peut ensuite être enlevé.

Alternativement, la chambre à vide 14 avec l'habillage de protection 30 monté sur le support 43 de celle-ci peut être enlevée de l'espace central formé après l'écartement des protubérances d'écartement 63 du positionneur 18.

Lors d'une étape 130 suivante, la chambre à vide 14 met l'habillage de protection 30 dans un état étiré en faisant son inversion.

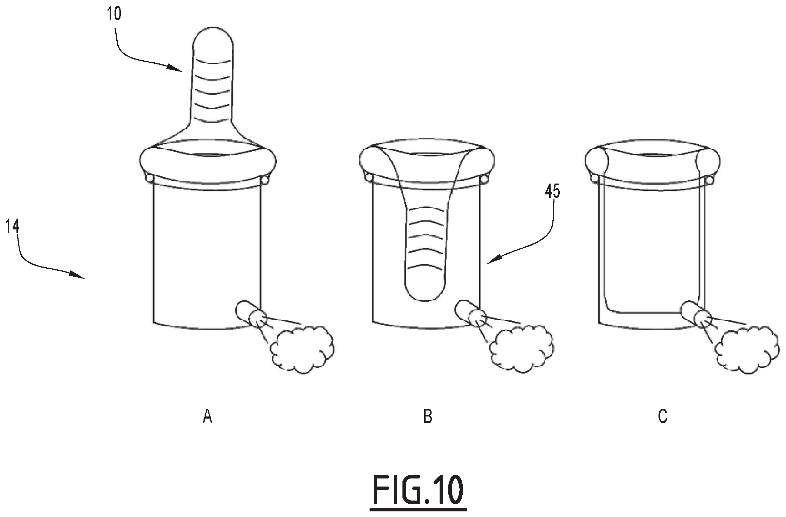

Pour ce faire, et comme cela est illustré sur la figure 10, le dispositif de dépressurisation 45 est activé. Sur la figure 10, la partie A illustre la position de l'habillage de protection 30 avant l'activation du dispositif dépressurisation 45, la partie B illustre cette position au début de son activation (i.e. inversion de l'habillage de protection 30) et la partie C illustre sa position dans un état étiré quelques instants après l'activation du dispositif de dépressurisation 45.

La valeur de dépressurisation ainsi que le temps d'actionnement du dispositif de dépressurisation 45 peuvent être paramétrés par le module de commande 20 en fonction par exemple de la structure, de la taille, de la capacité d'extension et/ou de la composition de l'habillage de protection 30.

Par exemple, lorsque l'habillage de protection 30 présente un doigtier horloger, ces valeurs sont adaptées pour ne pas abimer l'extrémité scellée de ce doigtier.

Lors d'une étape 140 suivante, l'habillage de protection 30 dans l'état étiré est positionné sur l'un des mors 27 du dispositif robotisé 12.

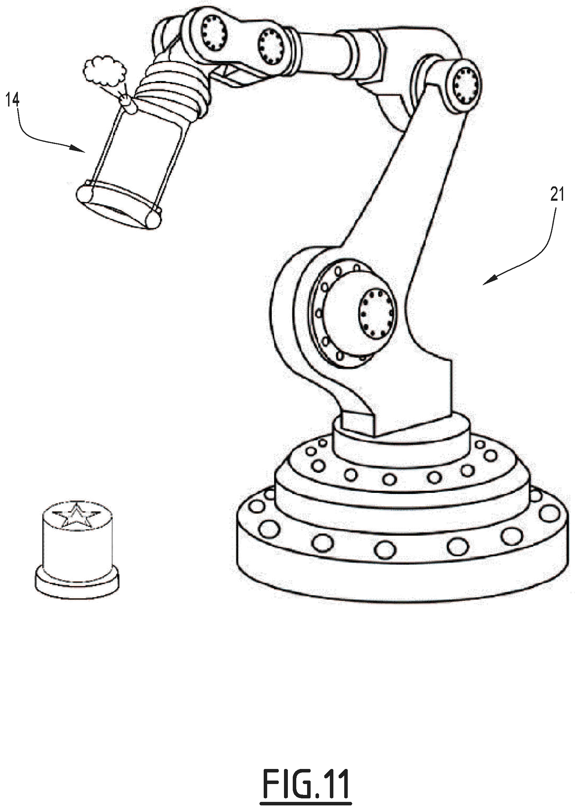

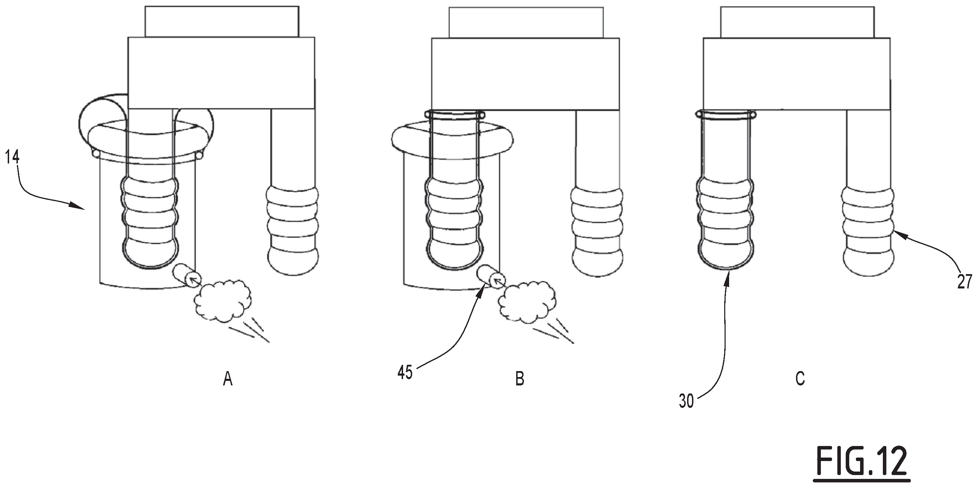

Pour ce faire, comme cela est illustré sur la figure 11 et 12, lors d'une sous-étape A, le bras robotisé 21 peut être activé pour saisir la chambre à vide 14 de sorte que le mors 27 correspondant pénètre dans l'habillage de protection 30 qui se trouve alors dans l'état étiré par la chambre à vide 14.

Ensuite, lors d'une sous-étape B, le trou de la chambre à vide 14 est ouvert de sorte qu'une pression normale est rétablie dans le volume interne de cette chambre à vide 14.

En variante, le dispositif de dépressurisation 45 est activé dans la direction inverse afin de créer une pression positive à l'intérieur de ce volume interne de la chambre à vide 14.

Cela libère alors lors d'une sous-étape C l'habillage de protection 30 de la chambre à vide 14 et la chambre à vide 14 peut être écartée du mors 27 du bras robotisé 21.

Ensuite, les mêmes étapes 110 à 140 peuvent être répétées en relation avec l'autre mors 27 du dispositif robotisé 12.

**Il** est à noter par ailleurs que plusieurs chambres à vide 14 peuvent être utilisées en parallèle pour accélérer ce processus. Dans ce cas, les étapes 110 à 140 peuvent être mises en œuvre au moins partiellement en parallèle.

**Il** est à noter également que dans certains modes de réalisation, les étapes 110 et 120 peuvent être optionnelles et/ou peuvent être mises en œuvre manuellement par l'opérateur.

À la fin de la phase P1 de positionnement, un habillage de protection 30 est alors mis sur chacun des mors 27 du dispositif robotisé 12. **Il** est à noter que la surface opérationnelle de chacun des habillages de protection 30 se trouve orientée vers l'extérieur.

La deuxième phase P2 du procédé comprend alors une étape 210 de préhension et de manipulation dudit composant de l'article de luxe.

Pour cela, ce composant de l'article de luxe peut alors être serré entre les mors 27 du dispositif robotisé 12.

Ensuite, le segment d'extrémité 25 de ce dispositif 12 peut être activé pour déplacer ledit composant de l'article de luxe selon la direction souhaitée.

Cette direction peut être déterminée par le module de commande 20 à partir des commandes transmises par l'opérateur via l'interface de commande 22.

Ensuite, la même étape 210 peut être répétée en relation avec un autre composant d'un autre article de luxe ou du même article de luxe.

Lorsqu'il est nécessaire d'enlever chaque habillage de protection 30 des mors 27 correspondants, une troisième phase P3 peut alors être activée.

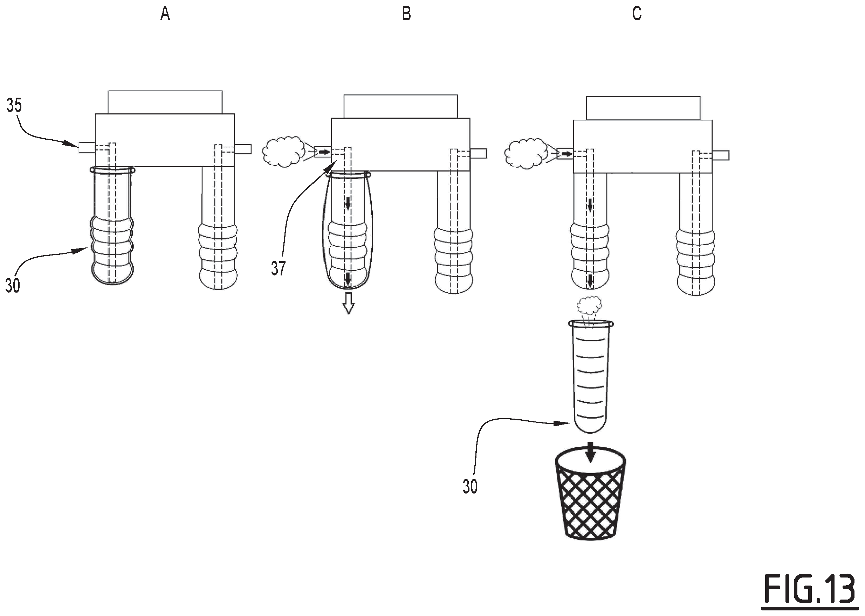

Pour cela, lors d'une étape 310 de retrait, le dispositif de retrait 35 est activé, comme cela est illustré sur la figure 13.

En particulier, cette activation engendre un flux d'air comprimé dans le canal pneumatique 37 de chaque mors 27.

Cela permet alors de créer une surpression entre l'habillage de protection 30 et le mors 27 correspondant et la force créée éjecte l'habillage de protection 30, comme cela est illustré dans les parties B et C de la figure 13.

L'habillage de protection 30 peut ensuite être récupéré pour un recyclage éventuel.

L'étape 310 peut ensuite être réitérée en relation avec un autre habillage de protection 30.

On conçoit alors que la présente invention présente un certain nombre d'avantages.

Tout d'abord, il est clair que l'invention permet d'éviter l'endommagement des composants des articles de luxe car toute manipulation avec ceux-ci s'effectue de manière automatique et en utilisant un habillage de protection.

Cela permet en outre de rendre le processus répétable et précis car le dispositif robotisé peut être programmé pour effectuer des tâches prédéterminées.

En outre, l'utilisation d'un habillage de protection tel qu'un doigtier horloger est particulièrement avantageuse étant donné qu'il s'agit d'un consommable déjà présent dans les usines de production et d'emballage. Un tel doigtier horloger présente généralement un coût relativement bas.

Bien entendu, d'autres modes de réalisation restent également possibles.

## Revendications

1. Système de manipulation (10) d'un composant d'un article de luxe tel qu'une pièce d'horlogerie ou de joaillerie, comprenant un dispositif robotisé (12) comprenant au moins un mors (27) configuré pour recevoir un habillage de protection (30) pour envelopper au moins partiellement ledit mors (27), l'habillage de protection (30) étant au moins partiellement constitué d'une membrane élastique.

2. Système (10) selon la revendication 1, dans lequel l'habillage de protection (30) est une enveloppe en polymère étirable/élastique, par exemple un doigtier horloger.

3. Système (10) selon la revendication 1 ou 2, comprenant en outre une chambre à vide (14) configurée pour mettre l'habillage de protection (30) dans un état étiré ; le dispositif robotisé (12) étant configuré pour déplacer le mors (27) dans la chambre à vide (14) afin de positionner l'habillage de protection (30) dans l'état étiré sur le mors (27).

4. Système (10) selon la revendication 3, dans lequel le dispositif robotisé (12) comprend au moins une paire de mors (27), chaque mors (27) étant configuré pour recevoir un habillage de protection (30) ;
le dispositif robotisé (12) étant configuré pour déplacer au moins l'un des mors (27) dans la chambre à vide (14) afin de positionner un habillage de protection (30) respectif.

5. Système (10) selon l'une quelconque des revendications précédentes, comprenant en outre un dérouleur (16) configuré pour dérouler l'habillage de protection (30) d'un état enroulé à un état déroulé.

6. Système (10) selon la revendication 5, dans lequel le dérouleur (16) comprend un dispositif de maintien (57) configuré pour maintenir l'habillage de protection (30) lors de son positionnement et/ou déroulement.

7. Système (10) selon la revendication 6, dans lequel le dispositif de maintien (57) est configuré en outre pour enlever et maintenir l'habillage de protection (30) dans l'état déroulé.

8. Système (10) selon l'une quelconque des revendications précédentes prise en combinaison avec la revendication 3, dans lequel la chambre à vide (14) comprend :
- un corps (41) délimitant un volume interne de la chambre à vide (14) et définissant une ouverture (47);
- un support (43) disposé sur l'ouverture (47) du corps (41) et configuré pour fixer une base (32) de l'habillage de protection (30) en fermant ainsi le volume interne de la chambre à vide (14);
- un dispositif de dépressurisation (45) configuré pour créer une dépressurisation dans le volume interne de la chambre à vide (14) lorsque la base (32) de l'habillage de protection (30) est fixée sur le support (43).

9. Système (10) selon la revendication 8, comprenant en outre un positionneur (18) configuré pour positionner la base (32) de l'habillage de protection (30) sur le support (43) de la chambre à vide (14).

10. Système (10) selon la revendication 9, dans lequel le positionneur (18) comprend un dispositif d'écartement (61) configuré pour adapter les dimensions de la base (32) de l'habillage de protection (30) à celles du support (43) de la chambre à vide (14).

11. Système (10) selon l'une quelconque des revendications précédentes, dans lequel le dispositif robotisé (12) comprend en outre un dispositif de retrait (35) permettant de retirer l'habillage de protection (30) du ou de chaque mors (27) après son utilisation.

12. Système (10) selon la revendication 11, dans lequel le dispositif de retrait (35) comprend un canal pneumatique (37) pour le ou chaque mors (27), intégré dans ce mors (27) et configuré pour éjecter de l'air sous pression pour retirer l'habillage de protection (30) lorsque l'habillage de protection (30) est reçu sur ce mors (27).

13. Procédé de manipulation d'un composant d'un article de luxe par un système de manipulation (10) selon l'une quelconque des revendications précédentes, le procédé comprenant les étapes suivantes :
- mise (130) d'un habillage de protection (30) dans un état étiré ;
- positionnement (140) de l'habillage de protection (30) sur un mors (27) d'un dispositif robotisé (12) du système de manipulation (10).

14. Procédé selon la revendication 13, comprenant en outre une étape (110) de déroulement de l'habillage de protection (30) d'un état enroulé à un état déroulé.

15. Procédé selon la revendication 14, comprenant en outre une étape de positionnement (120) de l'habillage de protection (30) dans l'état déroulé sur un support (43) pour sa mise dans l'état étiré ;
de préférence, le procédé comprenant en outre une étape (310) de retrait de l'habillage de protection (30) du mors (27) correspondant.
